# EUROPÄISCHE PATENTSCHRIFT

(11) **EP 2 829 804 B1**
(45) Veröffentlichungstag und Bekanntmachung des Hinweises auf die Patenterteilung: **18.05.2016**
(21) Anmeldenummer: 14169856.3
(22) Anmeldetag: 26.05.2014
(51) Int. Cl.: F23R 3/00, F23R 3/06

(54) **Brennkammerschindel einer Gasturbine sowie Verfahren zu deren Herstellung**
Combustion chamber shingle of a gas turbine and method for their preparation
Bardeaux de chambre de combustion d'une turbine à gaz et leur procédé fabrication

(30) Priorität: 24.07.2013 DE 102013214487
(43) Veröffentlichungstag der Anmeldung: 28.01.2015
(73) Patentinhaber: Rolls-Royce Deutschland Ltd & Co KG, 15827 Blankenfelde-Mahlow (DE)
(72) Erfinder: Clemen, Dr.-Ing. Carsten, 15749 Mittenwalde (DE)
(74) Vertreter: Hoefer & Partner Patentanwälte mbB

(56) Entgegenhaltungen:
- EP-A1- 0 985 802
- EP-A2- 1 635 119
- EP-A2- 1 887 107
- WO-A1-2006/069941
- US-A- 4 004 056
- US-A- 5 941 686
- US-B1- 7 658 590

## Beschreibung

Die Erfindung bezieht sich auf eine Brennkammerschindel einer Gasturbine sowie ein Verfahren zu deren Herstellung.

Im Einzelnen bezieht sich die Erfindung auf eine Brennkammerschindel mit einem plattenförmigen Grundkörper, welcher mit zumindest einem Effusionskühlloch versehen ist, welches sich durch den Grundkörper von einer Oberfläche einer Seite zur anderen Seite erstreckt, wobei das Effusionskühlloch von der einen Seite des Grundkörpers aus von einer Eintrittsöffnung beginnend über einen Teil seiner Länge im Wesentlichen rechtwinklig zur Oberfläche ausgebildet ist.

Brennkammerschindeln zeichnen sich dadurch aus, dass sie eine beliebige (sehr hohe, oftmals mehrere Tausend) Anzahl von Effusionskühllöchern auf der zur Brennkammer gerichteten Seite aufweisen. Diese Effusionslöcher dienen dazu, die Schindel gegenüber den hohen Temperaturen in der Brennkammer zu kühlen. Darüber hinaus befindet sich auf der Brennkammerschindel mindestens ein Mischluftloch, das dazu dient, Luft aus dem die Brennkammer außen umgebenden Raum (Ringkanal/Annulus) in die Brennkammer zum Zwecke des Abkühlens und Abmagerns der Verbrennung und damit der Reduktion der NOx Entstehung in der Brennkammer zu leiten. Neben der Kühlung durch die Effusionskühllöcher, sind die Schindeln mit einer keramischen Beschichtung versehen, die als Dämmschicht gegen die hohen Temperaturen in der Brennkammer wirkt. Die keramische Beschichtung wird dabei auf die der Brennkammer zugewandte Seite der Schindel aufgesprüht. Die Effusionskühllöcher sind dabei häufig normal zur Oberfläche der Brennkammerschindel ausgeführt.

Beim Beschichten der Brennkammerschindel mit einer keramischen Beschichtung ergeben sich grundsätzlich zwei Möglichkeiten. Die eine Möglichkeit besteht darin, die Schindel zu beschichten, bevor die Effusionskühllöcher in die Schindel eingebracht sind. Dies bedeutet, dass die Effusionskühllöcher nach der Beschichtung in den Grundkörper der Schindel gebohrt werden. Dies führt jedoch zum Abplatzen der keramischen Beschichtung. Zusätzlich ist es erforderlich, die Effusionskühllöcher mittels eines Bohrvorgangs auszubilden. Dies ist sehr zeitaufwändig und kostenintensiv. Eine Alternative besteht darin, die Schindel zunächst mit den Effusionskühllöchern zu versehen und sie nachträglich zu beschichten. Bei dieser Vorgehensweise ergibt sich jedoch das Problem, dass die Effusionskühllöcher durch die Beschichtungsmasse verstopfen und/oder zumindest teilweise verschlossen werden. Aus dem Stand der Technik ist es hierzu bekannt, beispielsweise das Effusionskühlloch vor der Beschichtung abzudecken (US 4 743 462 A) oder den Mündungsbereich des Effusionskühllochs so auszubilden, dass möglichst wenig Beschichtungsmaterial eintreten kann. Derartige Lösungen sind aus der US 2009/0142548 A1 oder der US 2012/0094029 A1 vorbekannt. Eine ähnliche Lösung zeigt auch die EP 0 985 802 A1.

Die EP 1 635 119 A2 beschreibt eine Brennkammerschindel, welche aus mehreren Ringen aufgebaut ist. Die Durchgangsbohrungen sind dabei jeweils in einem Winkel zur Oberfläche angeordnet und zueinander versetzt an den äußeren und inneren Ringen vorgesehen. Ein mittlerer Ring weist ebenfalls geeignete, etwas größere Durchgangsbohrungen auf.

Der Erfindung liegt die Aufgabe zugrunde, eine Brennkammerschindel der eingangs genannten Art sowie ein Verfahren zu deren Herstellung zu schaffen, welche bei einfachem Aufbau und einfacher, kostengünstiger Herstellbarkeit die Aufbringung einer nachträglichen Beschichtung ohne die Gefahr eines Verstopfens der Effusionskühllöcher ermöglichen.

Erfindungsgemäß wird die Aufgabe durch die Merkmalskombinationen der unabhängigen Ansprüche gelöst.

Erfindungsgemäß ist somit vorgesehen, dass das Effusionskühlloch innerhalb des Grundkörpers der Brennkammerschindel zunächst einen geradlinigen Verlauf aufweist und nachfolgend mit einem geknickten Verlauf versehen ist. Das Effusionskühlloch erstreckt sich somit nicht, wie beim Stand der Technik bekannt, geradlinig durch die Brennkammerschindel. Der Stand der Technik zeigt geradlinige Effusionskühllöcher, welche sich senkrecht (normal) zur Oberfläche der Brennkammerschindel oder in einem Winkel hierzu erstrecken. Diese vorbekannten Effusionskühllöcher sind jedoch stets geradlinig. Im Unterschied hierzu weist die erfindungsgemäße Ausgestaltung einen deutlichen Knick auf, welcher in einem, bezogen auf die Gesamtlänge des Effusionskühllochs, mittleren Bereich des Effusionskühllochs ausgebildet ist. Dabei ist es besonders günstig, wenn das Effusionskühlloch in dem mit dem geknickten Verlauf versehenen Bereich gegenüberliegend der Eintrittsöffnung des Effusionskühllochs eine Schulter bildet. Diese Schulter formt eine Ablagefläche, auf welcher sich durch die Eintrittsöffnung eingetretenes Beschichtungsmaterial ansammeln kann. Das Beschichtungsmaterial gelangt somit durch den zunächst geradlinig verlaufenden Bereich des Effusionskühllochs und trifft dann auf den abgeknickten Bereich auf, der die erwähnte Schulter bildet. Dort lagert sich das Beschichtungsmaterial ab, ohne dass die Gefahr besteht, dass das Effusionskühlloch verstopft. Der abgeknickte Bereich bzw. die dadurch gebildete Schulter sind so bemessen, dass das der Größe der Eintrittsöffnung entsprechende Materialvolumen an Beschichtungsmaterial dort abgelagert werden kann, ohne dass der Querschnitt des Effusionskühllochs verengt oder verschlossen wird.

Erfindungsgemäß ist weiterhin ein Verfahren zur Herstellung einer Brennkammerschindel vorgesehen, wobei diese mittels eines additiven Laseraufschmelzverfahrens hergestellt wird, wobei bei der Herstellung zumindest ein Effusionskühlloch innerhalb eines Grundkörpers der Brennkammerschindel ausgebildet wird, welches von einer Oberfläche der Brennkammerschindel aus von einer Eintrittsöffnung aus zunächst einen geradlinigen Verlauf aufweist und nachfolgend mit einem geknickten Verlauf versehen ist, welcher gegenüberliegend zu der Eintrittsöffnung eine Schulter bildet, welche sich im Wesentlichen parallel zu der Oberfläche erstreckt und dass nachfolgend die Oberfläche mit einer Oberflächenbeschichtung als Sprühbeschichtung versehen wird, wobei das in die Eintrittsöffnung eintretende Material der Oberflächenbeschichtung sich auf der Schulter ablagert.

Erfindungsgemäß ist vorgesehen, die Schulter zur Ausbildung eines konkaven Bereichs zur Oberfläche des Grundkörpers geneigt auszubilden. Der konkave Bereich bildet somit ein Sammelvolumen, in welchem sich das Beschichtungsmaterial anhäufen kann. Auch bedingt durch die Viskosität des Beschichtungsmaterials und dessen Oberflächenspannung erfolgt somit in diesem Bereich der Schulter oder des abgeknickten Verlaufs des Effusionskühllochs ein Auffangvolumen, in dem das Beschichtungsmaterial sicher abgelagert werden kann.

Erfindungsgemäß weisen somit die Effusionskühllöcher einen geknickten Verlauf auf und haben im Knick eine Vertiefung bzw. eine Aufweitung ihres Durchmessers. Dies ergibt sich zwangsläufig durch den geknickten Verlauf des Effusionskühllochs. Die in die Eintrittsöffnung des Effusionskühllochs eingesprühte Volumenmenge des Beschichtungsmaterials lagert sich somit im Bereich des Knicks oder der Schulter ab, ohne dass das Effusionskühlloch verstopft. Der weitere Verlauf des Effusionskühllochs zur unbeschichteten Seite der Brennkammerschindel kann beliebig ausgebildet sein. Der Verlauf des Effusionskühllochs von der zu beschichtenden Oberfläche der Brennkammerschindel ist bevorzugterweise senkrecht zu der Oberfläche ausgebildet.

Die erfindungsgemäße Brennkammerschindel wird bevorzugterweise mittels eines Laserauftragsverfahrens hergestellt, bei welchem ein pulverförmiges Material schichtweise mittels eines Lasers aufgeschmolzen wird. Hierdurch ist es möglich, beliebige Verläufe von Effusionskühllöchern zu erzeugen.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß dem Stand der Technik;
- Fig. 2: eine schematische Seiten-Schnittansicht einer erfindungsgemäß zu verwendenden Brennkammer;
- Fig. 3: eine Draufsicht und eine Seitenansicht einer Brennkammerschindel gemäß dem Stand der Technik;
- Fig. 4: eine Seitenansicht, analog Fig. 3, mit aufgebrachter Beschichtung;
- Fig. 5: eine Schnittansicht, analog Fig. 4, mit ausgebildeten Effusionskühllöcher, wobei die ersten vier löcher nicht Teil der Erfindung sind; und
- Fig. 6: weitere Ausführungsbeispiele der Erfindung, wobei die ersten drei löcher nicht Teil der Erfindung sind.

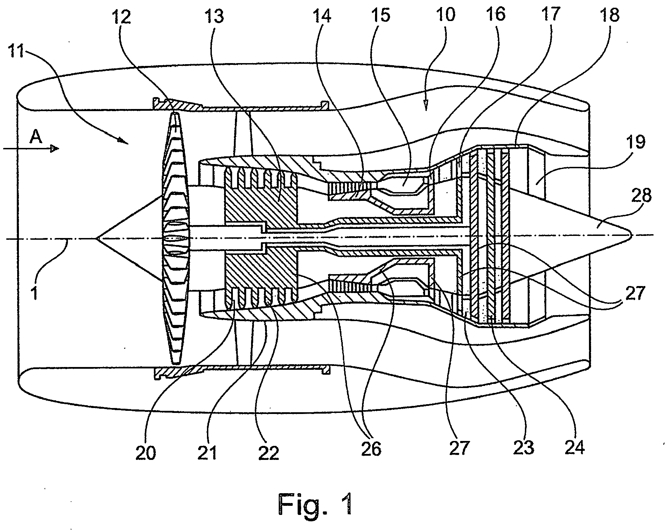

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

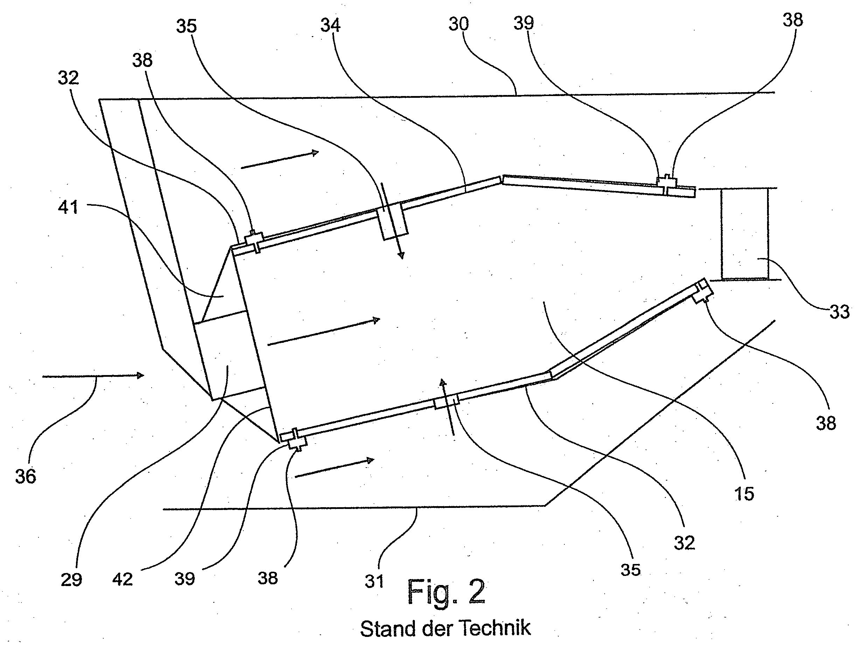

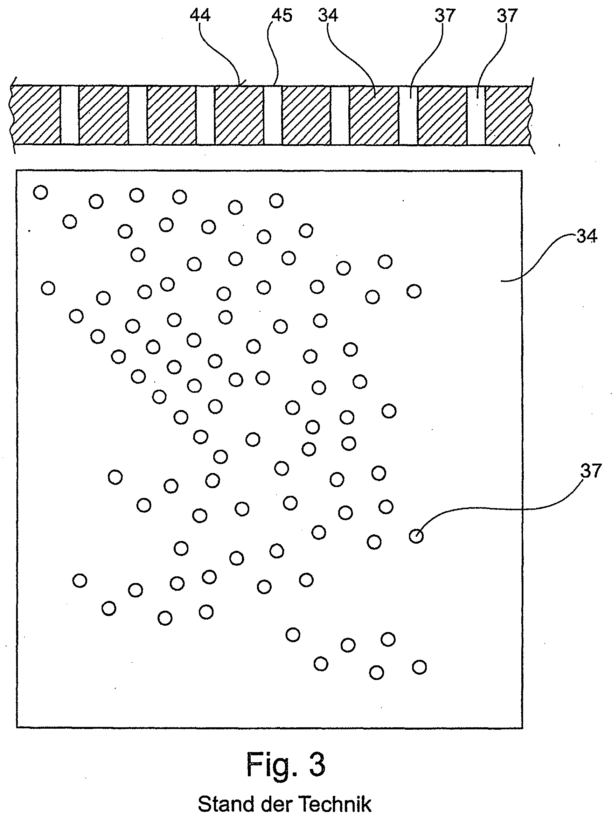

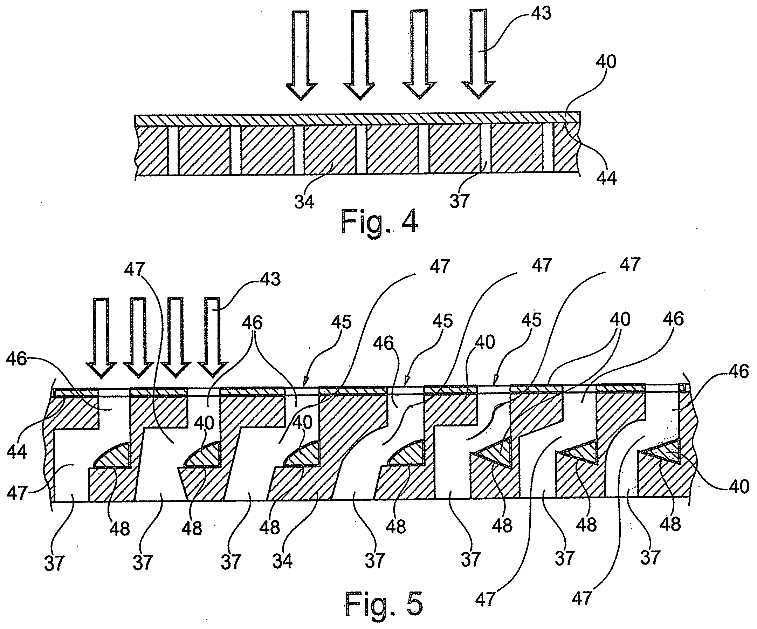

Die Fig. 2 zeigt schematisch den Aufbau einer erfindungsgemäß zu verwendenden, aus dem Stand der Technik bekannten Brennkammer 15. Diese umfasst eine Treibstoffdüse 29 sowie ein Brennkammeraußengehäuse 30 und ein Brennkammerinnengehäuse 31. Mit dem Bezugszeichen 32 ist eine Brennkammerwand dargestellt. Am Austrittsbereich der Brennkammer befindet sich eine Turbinenvorleitreihe 33. An der Brennkammerwand 32 sind Brennkammerschindeln 34 angeordnet, welche Zumischlöcher 35 aufweisen können. Die Luft strömt in Zuströmrichtung 36 durch die Brennkammer. Kühlluft wird durch Effusionskühllöcher 37 (s. Fig. 3) durch die Brennkammerschindel 34 durchgeleitet. Zur Befestigung der Brennkammerschindel 34 können Gewindestifte 38 mit Muttern 39 dienen. Wie sich aus der Fig. 4 ergibt, weist die Brennkammerschindel 34 eine keramische Beschichtung (Oberflächenbeschichtung) 40 auf, welche auf die Brennkammerschindel 34 aufgesprüht wird (Beschichtungsrichtung 43 gemäß Fig. 4).

Die Fig. 2 zeigt zum Aufbau der Brennkammer weiterhin einen Brennkammerkopf 41 und ein Hitzeschild 42.

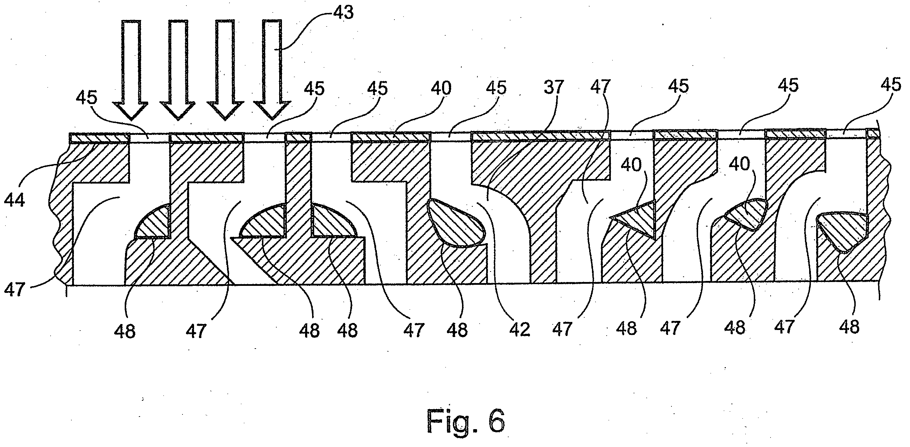

Die Fig. 5 und 6 zeigen jeweils in schematischer Schnittansicht den Aufbau der erfindungsgemäßen Brennkammerschindel analog Fig. 4. In den Fig. 5 und 6 sind jeweils unterschiedlichste Verläufe und Querschnittsformen der erfindungsgemäßen Effusionskühllöcher 37 dargestellt, wobei die Anordnung und Darstellung der Effusionskühllöcher nur zum Zwecke der Verdeutlichung der Erfindung erfolgt und nicht notwendigerweise in diesem Abstand der Effusionskühllöcher und in dieser wechselnd ausgebildeten Anordnung bestehen muss.

Es ergibt sich, dass die Oberfläche 44 der Brennkammerschindel 34 in Beschichtungsrichtung 43 mit einer keramischen Beschichtung 40 besprüht wird. Hierbei wird die Beschichtung 40 an den Bereichen der Brennkammerschindel 34 abgelagert, an denen sich keine Effusionskühllöcher 37 befinden. Im Bereich von Eintrittsöffnungen 45 der Effusionskühllöcher tritt das Material der keramischen Beschichtung 40 in den zunächst geradlinig und senkrecht zur Oberfläche 44 verlaufenden Bereich 46 der Effusionskühllöcher 37 ein. Das Effusionskühlloch weist anschließend an dem geradlinigen Verlauf 46 einen Knick oder geknickten Verlauf 47 auf. In diesen geknickten Verlauf 47 ergibt sich eine Querschnittserweiterung des Effusionskühllochs 37. Weiterhin wird eine Schulter 48 gebildet, welche eine Ablagefläche schafft, die im Wesentlichen gegenüberliegend zu der Eintrittsöffnung 45 angeordnet ist, so wie dies die drei linken Ausführungsbeispiele gemäß Fig. 5 und 6 erläutern. Das durch die Eintrittsöffnung 45 eintretende Beschichtungsmaterial 40 wird somit auf der Schulter 48 angesammelt und verbleibt dort, so wie dies in den Fig. 5 und 6 dargestellt ist.

Es versteht sich, dass die als Eintrittsöffnung 45 bezeichnete Öffnung der Brennkammerschindel im Hinblick auf die Aufbringung der keramischen Beschichtung 40 als Eintrittsöffnung definiert ist. Der Verlauf der Kühlluft erfolgt so, dass diese an der Beschichtungs-Eintrittsöffnung 45 austritt, da die keramische Beschichtung 40 innenliegend, bezogen auf die Brennkammer 15, angeordnet ist.

Die Schulter 48 bzw. der geknickte Verlauf 47 sind so ausgebildet dass sich eine Tasche oder ein konkaver Bereich ausbildet, so wie dies insbesondere auf den drei rechten Ausführungsbeispielen der Fig. 5 und 6 dargestellt ist. Dies führt zu einer noch sichereren Ablagerung des Beschichtungsmaterials 40.

Der restliche Verlauf der erfindungsgemäßen Effusionskühllöcher kann beliebig sein, er kann abgerundete oder eckige Formen aufweisen. Der Austritt des Effusionskühllochs zur nicht beschichteten Seite der Brennkammerschindel 34 kann senkrecht zu dieser Oberfläche oder in einem Winkel ausgebildet sein.

Wie oben stehend erläutert, befindet sich die keramische Beschichtung 40 an der dem Innenraum der Brennkammer 15 zugewandten Seite der Brennkammerschindel 34, so dass die Durchströmungsrichtung mit Kühlluft gemäß Fig. 5 und 6 von unten nach oben erfolgt. Die Kühlluft tritt somit durch die Eintrittsöffnung 45 aus und verläuft somit gegenläufig zu der in den Fig. 5 und 6 dargestellten Beschichtungsrichtung 43, mit der die keramische Beschichtung 40 aufgesprüht wird.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor.
- 15: Brennkammern
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -Scheibe
- 27: Turbinenrotornabe
- 28: Auslasskonus
- 29: Treibstoffdüse
- 30: Brennkammeraußengehäuse
- 31: Brennkammerinnengehäuse
- 32: Brennkammerwand
- 33: Turbinenvorleitreihe
- 34: Brennkammerschindel
- 35: Zumischloch
- 36: Zuströmrichtung
- 37: Effusionskühlloch
- 38: (Gewinde)-Stift
- 39: Mutter
- 40: keramische Beschichtung (Oberflächenbeschichtung)
- 41: Brennkammerkopf
- 42: Hitzeschild
- 43: Beschichtungsrichtung
- 44: Oberfläche
- 45: Eintrittsöffnung
- 46: geradliniger Verlauf
- 47: Knick / geknickter Verlauf
- 48: Schulter

## Patentansprüche

1. Brennkammerschindel einer Gasturbine mit einem plattenförmigen Grundkörper, welcher mit zumindest einem Effusionskühlloch (37) versehen ist, welches sich durch den Grundkörper von einer Oberfläche (44) einer Seite zur anderen Seite erstreckt, wobei das Effusionskühlloch (37) von der einen Seite des Grundkörpers aus von einer Eintrittsöffnung (45) über einen Teil seiner Länge im Wesentlichen rechtwinklig zur Oberfläche ausgebildet ist, wobei das Effusionskühlloch (37) innerhalb des Grundkörpers einen geradlinigen Verlauf (46) aufweist und nachfolgend mit einem geknickten Verlauf (47) versehen ist, wobei das Effusionskühlloch (37) in dem mit dem geknickten Verlauf (47) versehenen Bereich gegenüberliegend der Eintrittsöffnung (45) eine Schulter (48) bildet, wobei die Schulter (48) zur Ausbildung eines konkaven Bereichs zur Oberfläche (44) des Grundkörpers geneigt ausgebildet ist, wobei die Brennkammerschindel (34) an der mit der Eintrittsöffnung (45) versehenen Seite des Grundkörpers mit einer keramischen Oberflächenbeschichtung (40) versehen ist, welche als Sprühbeschichtung ausgebildet ist, wobei die Brennkammerschindel mittels eines additiven Laseraufschmelzverfahrens hergestellt ist.

2. Verfahren zur Herstellung einer Brennkammerschindel, **dadurch gekennzeichnet, dass** diese mittels eines additiven Laseraufschmelzverfahrens hergestellt wird, wobei bei der Herstellung zumindest ein Effusionskühlloch (37) innerhalb eines Grundkörpers der Brennkammerschindel ausgebildet wird, welches von einer Oberfläche (44) der Brennkammerschindel aus von einer Eintrittsöffnung (45) aus zunächst einen geradlinigen Verlauf (46) aufweist und nachfolgend mit einem geknickten Verlauf (47) versehen ist, welcher gegenüberliegend zu der Eintrittsöffnung (45) eine Schulter (48) bildet, wobei die Schulter (48) zur Ausbildung eines konkaven Bereichs zur Oberfläche (44) des Grundkörpers geneigt ausgebildet ist, und dass nachfolgend die Oberfläche (44) mit einer keramischen Oberflächenbeschichtung (40) als Sprühbeschichtung versehen wird, wobei das in die Eintrittsöffnung (45) eintretende Material der Oberflächenbeschichtung (40) sich auf der Schulter (48) ablagert.

## Claims

1. Combustion chamber tile of a gas turbine having a plate-shaped basic body which is provided with at least one effusion cooling hole (37) extending through the basic body from a surface (44) of one side to the other side, where the effusion cooling hole (37) is designed, starting from said one side of the basic body from an inlet opening (45), substantially perpendicular to the surface over part of its length, where the effusion cooling hole (37) inside the basic body has a straight course (46) and is then provided with a bent course (47), where the effusion cooling hole (37) forms a shoulder (48) opposite the inlet opening (45) in the area provided with the bent course (47), where the shoulder (48) is designed inclined relative to the surface (44) of the basic body in order to form a concave area, where the combustion chamber tile (34) is given a ceramic surface coating (40) designed in the form of a spray coating on that side of the basic body which is provided with the inlet opening (45), and where the combustion chamber tile is manufactured by means of an additive laser deposition method.

2. Method for the manufacture of a combustion chamber tile, **characterized in that** the latter is manufactured by means of an additive laser deposition method, where at least one effusion cooling hole (37) is provided within a basic body of the combustion chamber tile during manufacture, said effusion cooling hole (37), starting from one surface (44) of the combustion chamber tile from an inlet opening (45), initially has a straight course (46) and is then provided with a bent course (47), which forms a shoulder (48) opposite the inlet opening (45), where the shoulder (48) is designed inclined relative to the surface (44) of the basic body in order to form a concave area, and that subsequently the surface (44) is given a ceramic surface coating (40) in the form of a spray coating, and where the material of the surface coating (40) entering the inlet opening (45) is deposited on the shoulder (48).

## Revendications

1. Bardeau de chambre de combustion d'une turbine à gaz, comportant un corps de base en forme de plaque et doté d'au moins un trou de refroidissement par effusion (37), lequel s'étend à travers le corps de base d'une surface (44) d'un côté à l'autre côté, sachant que le trou de refroidissement par effusion (37) est formé, à partir dudit côté du corps de base, d'une ouverture d'entrée (45) et est sensiblement perpendiculaire à ladite surface sur une partie de sa longueur, qu'à l'intérieur du corps de base le trou de refroidissement par effusion (37) présente un tracé rectiligne (46) et est ensuite doté d'un tracé incurvé (47), que le trou de refroidissement par effusion (37) forme dans la zone dotée du tracé incurvé (47) un épaulement (48) opposé à l'ouverture d'entrée (45), que pour former une zone concave par rapport à la surface (44) du corps de base, l'épaulement (48) est formé de manière inclinée, que sur le côté du corps de base muni de l'ouverture d'entrée (45), le bardeau de chambre de combustion (34) est doté d'un revêtement de surface céramique (40), lequel est conçu sous forme de revêtement par pulvérisation, le bardeau de chambre de combustion étant fabriqué par un procédé additif de fusion laser.

2. Procédé de fabrication d'un bardeau de chambre de combustion, **caractérisé en ce que** celui-ci est fabriqué par un procédé additif de fusion laser, sachant que lors de la fabrication est formé à l'intérieur d'un corps de base du bardeau de chambre de combustion au moins un trou de refroidissement par effusion (37), lequel depuis une surface (44) du bardeau de chambre de combustion à partir d'une ouverture d'entrée (45) présente tout d'abord un tracé rectiligne (46) et est ensuite doté d'un tracé incurvé (47), qui forme un épaulement (48) opposé à l'ouverture d'entrée (45), que pour former une zone concave par rapport à la surface (44) du corps de base, l'épaulement (48) est formé de manière inclinée, et qu'ensuite la surface (44) est dotée d'un revêtement de surface céramique (40) sous forme de revêtement par pulvérisation, et que la matière du revêtement de surface (40) entrant par l'ouverture d'entrée (45) se dépose sur l'épaulement (48).
